# EUROPÄISCHE PATENTSCHRIFT

(11) **EP 2 039 658 B1**
(45) Veröffentlichungstag und Bekanntmachung des Hinweises auf die Patenterteilung: **01.01.2020**
(21) Anmeldenummer: 08450130.3
(22) Anmeldetag: 09.09.2008
(51) Int. Cl.: C02F 1/52, B82Y 30/00

(54) **Verwendung eines Fällungs- und Flockungsmittels mit Nanopartikeln zur Reinigung von Wasser und Verfahren zur Wasserreinigung**
Use of a coagulant and flocculent comprising nanoparticles for treating water and water treatment method
Utilisation d'un coagulant et floculant comprenant des particules nano destiné au traitement de l'eau et procédé de traitement de l'eau

(30) Priorität: 20.09.2007 AT 14842007
(43) Veröffentlichungstag der Anmeldung: 25.03.2009
(73) Patentinhaber: Kubinger, Ulrich, 4675 Weibern (AT)
(72) Erfinder: Kubinger, Ulrich, 4675 Weibern (AT)
(74) Vertreter: Hübscher & Partner Patentanwälte GmbH

(56) Entgegenhaltungen:
- EP-A- 1 721 869
- WO-A-2005/111129
- WO-A-2007/041553
- WO-A-2007/047624
- DE-A1-102004 009 287
- US-A1- 2002 070 172
- US-A1- 2004 026 657

## Beschreibung

Die Erfindung betrifft die Verwendung eines Fällungs- und Flockungsmittels und ein Verfahren zur Reinigung von Wasser von Schwebstoffen damit, beispielsweise von Trinkwasser-, Brauchwasser- und Abwasser, insbesondere von Faulschlammwasser, das bei der Klärschlammentwässerung anfällt, mit einem Gemisch aus wenigstens einem Fällungsmittel auf Metallbasis, Flockungs- und Flockungshilfsmitteln.

Zum Einsatz kommen Fällungsmittel bei der Reinigung kommunaler und industrieller Abwässer in Kläranlagen, bei der Aufbereitung von Prozess- und Kreislaufwasser und der Klärung Nutz- oder Trinkwasser. Zum Entfernen von Verunreinigungen aus verschiedenen Strömen ist es bekannt (WO 2007041553 A1), die den Strom mit nanokristallinen Teilchen in Verbindung zu bringen, um Verunreinigung die Verunreinigungen zu Sorbieren. Zu solchen Strömen gehören insbesondere Ströme mit weniger als etwa 10 Gew .-% Kohlenwasserstoffverbindungen, vorwiegend Wasserstoffströme, Abwasserströme, Synthesegasströme und Ströme, die Kohlenwasserstoffverbindungen umfassen. Die eingesetzten nanokristallinen Teilchen weisen durchschnittliche Kristallitgrößen von weniger als etwa 20 nm auf und haben und relativ große Oberflächen. Aus der EP 1 721 869 A1 ist ein Verfahren zur Behandlung von Abwasser aus der Papierherstellung bekannt, das ein auf Siliciumdioxid-Aluminium basierendes Polymerflockungsmittel mit einem Si / Al-Molverhältnis von 0,2 bis 1,5 enthält und das in Abwasser der Papierherstellung mit einem pH-Wert oder einem derart eingestellten pH-Wert von 5 bis 14 enthalten ist. Die Konzentration des anorganischen Polymerflockungsmittels beträgt 1 bis 250 (mg-Al / l) in Bezug auf Aluminium, um den pH-Wert des Papierabwasseraufwands auf 5 bis 8 zu steuern und dann ein organisches Polymerflockungsmittel zuzusetzen. Das Verfahren zur Behandlung von Abwasser aus der Papierherstellung hat eine hohe Flockungswirksamkeit.

Mit derartigen Fällungsmitteln können selbst kleinste Wasserinhaltsstoffe aus dem zu reinigenden Wasser entfernt werden. Entspricht die Dichte der feinen Wasserinhaltsstoffe der des Wassers, halten sich diese in Schwebe und können nicht sedimentieren. Eine weitere Störung der Sedimentation ist durch eine gegenseitige Abstoßung der einzelnen Teilchen untereinander gegeben, was wiederum eine gegenseitige Zusammenballung der Schwebeteilchen verhindert. Eben dies soll mit derartigen Mitteln unterbunden werden. Mit Flockungsmitteln und Flockungshilfsmitteln werden die Schwebstoffe zu größeren Flocken zusammengeballt, wodurch diese eine größere Dichte erhalten, und letztendlich sedimentieren. Als Flockungsmittel werden zumeist Eisensalze und Aluminiumsalze verwendet. Flockungsmittel bilden aus den Schwebstoffen Mikroflocken, die sich bereits gut durch Filtration entfernen lassen. Ist eine Feststoffentfernung durch Sedimentation oder Flotation gewünscht, kommt zusätzlich zum Flockungsmittel ein Flockungshilfsmittel zum Einsatz, das aus den Mikroflocken größere Makroflocken bildet.

Flockungshilfsmittel finden insbesondere dort Verwendung, wo eine Fest-Flüssig-Trennung gewünscht ist und beschleunigen die Sedimentation von suspendierten Feststoffteilchen. Im vorliegenden Fall handelt es sich dabei um organische, synthetische, hochmolekulare und wasserlösliche Polymere. Als Flockungshilfsmittel kommen insbesondere Poly-Dialyldimethylamoniumchlorid, Polyamine, Polyacrylamide u. dgl. in fester und flüssiger Form zum Einsatz.

Als Nachteil ist den bekannten Fällungsmitteln und Verfahren zur Reinigung von Wasser zu eigen, dass die gewünschte Trennung von Feststoffen und Flüssigkeit einen erheblichen Zeitaufwand erfordert. Soll eine Reinigung von Wasser in Großem Stil erfolgen, ist auch ein erheblicher Aufwand hinsichtlich der Größe notwendiger Sedimentationsbecken gegeben.

Der Erfindung liegt somit die Aufgabe zugrunde, ein Fällungsmittel und ein Verfahren zur Reinigung von Wasser der eingangs geschilderten Art so zu verbessern, dass die Reinigungsleistung wirkungsvoll gesteigert wird.

Die Erfindung löst diese Aufgabe mit den Merkmalen der Ansprüche 1 und 2.

Überraschenderweise hat sich herausgestellt, dass die Sedimentationsgeschwindigkeit und somit die Reinigungsleistung durch die Zugabe synthetischer Nanopartikel auf der Basis von Metalloxiden erheblich gesteigert werden kann. Dabei kommt nanostrukturiertes Eisenoxid mit einer durchschnittlichen Korngröße von rund 10⁻⁹ Metern zum Einsatz, welches in die Matrix aus Flockungsmitteln und Flockungshilfsmitteln verteilt eingebunden ist. Damit ergibt sich aufgrund der verbesserten Reinigungswirkung zudem eine mögliche Einsparung stofflicher Ressourcen, insbesondere an der erforderlichen Menge von Fällungs-, Flockungs- und Flockungshilfsmitteln. Durch das Einbringen der Nanopartikel in die als Matrix wirkenden Fällungs-, Flockungs- bzw. Flockungshilfsmittel kommt es insbesondere auch aufgrund der großen Oberfläche der Nanopartikel zu einem erhöhten Ladungsausgleich zwischen den Schwebeteilchen, was die Zusammenballung der Schwebeteilchen erheblich beschleunigt und wodurch gegebenenfalls die eingesetzte Menge an Fällungs-, Flockungs- bzw. Flockungshilfsmitteln aufgrund der erheblich erhöhten Reinigungsleistung verringert werden kann. Aufgrund des verbesserten Ladungsausgleiches ergibt sich auch ein stabileres Agglomerat, das in einfacher Weise eine klare Trennung von fester und flüssiger Phase ermöglicht. Das erfindungsgemäße Mittel eignet sich insbesondere zur Reinigung von Wässern jeder Art, wie Gewässern, Trinkwasser und Abwasser. Die Nanoteilchen werden dabei in der festen Phase zurückgehalten und können mit dieser entsorgt bzw. weiterverarbeitet werden.

Eine besonders gute Reinigungsleistung ergibt sich, wenn einem Filtergemisch aus Flockungsmitteln und Flockungshilfsmitteln wenigstens eine Menge von 1µg synthetischen Nanopartikeln zudosiert ist, wobei sich herausgestellt hat, dass sich Nanopartikel auf der Basis von Aluminiumoxid und/oder Eisenoxid besonders gut zu diesem Zweck eignen.

Des Weiteren betrifft die Erfindung ein Verfahren zur Reinigung von Wasser von Schwebstoffen, beispielsweise Trinkwasser, Brauchwasser und Abwasser, insbesondere von Faulschlammwasser, das bei der Klärschlammentwässerung anfällt, durch Zugabe eines Gemisches aus Fällungs-, Flockungsmittel und Flockungshilfsmittel in einem Verfahrensschritt. Nach der Zugabe des Gemisches erfolg eine Sedimentation der Schwebstoffe in einem weiteren Verfahrensschritt, wobei dieser Verfahrensschritt nach der Zugabe in einen dafür vorgesehene Behälter abläuft. Um die Reinigungswirkung dabei wirkungsvoll zu steigern wird gemäß der Erfindung vorgeschlagen, dass dem außerhalb des Verfahrensschrittes vorbereiteten Gemisch aus Fällungs-, Flockungsmittel und Flockungshilfsmitteln synthetische Nanopartikel auf der Basis von Metalloxiden zudosiert werden, bevor das Gemisch dem Wasser zudosiert wird. Dabei empfiehlt es sich insbesondere, einem Liter Gemisch wenigstens eine Menge von 1µg synthetischen Nanopartikeln zu zudosieren.

Eine erheblich verbesserte Reinigungswirkung für das Wasser ergibt sich, wenn das Gemisch aus Flockungsmittel, Flockungshilfsmitteln und Nanopartikeln dem zu reinigenden Wasser in einer auf die Zulaufwassermenge bezogene Menge von 1 - 2000g/m³ beigemengt wird.

Des Weiteren betrifft die Erfindung die Verwendung eines mit synthetischen Nanopartikeln auf der Basis von Metalloxiden versehenen Gemisches aus Fällungsmittel, Flockungsmitteln und Flockungshilfsmitteln zur Ausfällung von Schwebstoffen aus Wasser.

## Patentansprüche

1. Verwendung eines mit synthetischen Nanopartikeln aus Eisenoxid versehenen Gemisches aus Fällungs-, Flockungsmittel und Flockungshilfsmitteln zur Ausfällung von Schwebstoffen aus Wasser, wobei die Menge an zudosierten, synthetischen Nanopartikeln im Gemisch wenigstens 1µg/l beträgt.

2. Verfahren zur Reinigung von Wasser, beispielsweise von Trinkwasser-, Brauchwasser- und Abwasser, insbesondere von Faulschlammwasser, das bei der Klärschlammentwässerung anfällt, von Schwebstoffen durch Zugabe eines Gemisches aus wenigstens einem Fällungsmittel, Flockungsmittel und Flockungshilfsmitteln in einem Verfahrensschritt, wonach eine Sedimentation der Schwebstoffe erfolgt, **dadurch gekennzeichnet, dass** dem außerhalb der Verfahrensschritte vorbereiteten Gemisch aus Fällungsmittel, Flockungsmittel und Flockungshilfsmitteln zusätzlich synthetische Nanopartikel aus Eisenoxid in einer Menge von wenigstens 1µg/l zudosiert werden, bevor das Gemisch dem Wasser zudosiert wird und das Gemisch aus Fällungsmittel, Flockungsmittel, Flockungshilfsmittel und Nanopartikeln dem zu reinigenden Wasser in einer auf die Zulaufwassermenge bezogenen Menge von 1 bis 2000 g/m³ beigemengt wird.

## Claims

1. Use of a mixture of precipitating agents, flocculation agents and flocculation aids, which is provided with synthetic nanoparticles of iron oxide, for precipitating suspended solids from water, wherein the quantity of metered synthetic nanoparticles in the mixture is at least 1 µg/l.

2. Method for cleaning water, e.g. drinking water, service water and wastewater, in particular digested sludge water which is produced in sewage sludge dewatering, of suspended solids by the addition of a mixture of at least one precipitating agent, flocculation agent and flocculation aids in one method step, after which sedimentation of the suspended solids takes place, **characterised in that** the mixture of precipitating agent, flocculation agent and flocculation aids which is prepared outside the method steps additionally has synthetic nanoparticles of iron oxide metered thereto in a quantity of at least 1 µg/l before the mixture is metered to the water, and the mixture of precipitating agent, flocculation agent, flocculation aids and nanoparticles is admixed to the water to be cleaned in an amount of 1 to 2000 g/m³ based on the quantity of inflow water.

## Revendications

1. Utilisation d'un mélange incluant des nanoparticules synthétiques à base d'oxydes de fer, à partir de précipitant, floculant et de moyens auxiliaires de floculation pour la précipitation de matières en suspension, de l'eau, la quantité de nanoparticules synthétiques à doser, dans le mélange, étant d'au moins 1 µg/l.

2. Procédé pour débarrasser l'eau, par exemple l'eau potable, l'eau non potable et les eaux usées, en particulier l'eau de boue digérée, qui est produite lors de l'assèchement des boues de curage, de matières en suspension par l'ajout d'un mélange à base d'au moins un précipitant, floculant et de moyens auxiliaires de floculation, dans une étape de procédé, après quoi se produit une sédimentation des matières en suspension, **caractérisé en ce que** sont ajoutées, en plus, des nanoparticules synthétiques à base d'oxydes de fer, en une quantité d'au moins 1 µg/l, au mélange, préparé en dehors des étapes de procédé, à partir de précipitant, floculant et de moyens auxiliaires de floculation, avant que le mélange ne soit ajouté à l'eau et le mélange à partir de précipitant, floculant, de moyens auxiliaires de floculation et de nanoparticules, ne soit incorporé à l'eau à nettoyer, en une quantité en référence à la quantité d'eau d'alimentation de 1 à 2000 g/m3.
